# EUROPÄISCHE PATENTANMELDUNG

(11) **EP 2 002 943 A1**
(43) Veröffentlichungstag der Anmeldung: **17.12.2008**
(21) Anmeldenummer: 08017282.8
(22) Anmeldetag: 02.05.2007
(51) Int. Cl.: B25H 1/06, B25H 1/10

(54) **Maschinenständer**

(30) Priorität: 12.06.2006 DE 202006009307 U
(62) Teilanmeldung aus: 07724771.6
(71) Anmelder: Metabowerke Gmbh, 72622 Nürtingen (DE)
(72) Erfinder: Bergmann, Laurenz, 49733 Haren/Ems (DE); Blekker, Ingo, 49843 Uelsen (DE); Evers, Jürgen, 48480 Spelle (DE); Meelker, Thomas, 49767 Twist (DE); Raasch, Klaus, 49744 Geeste (DE)
(74) Vertreter: Gesthuysen, von Rohr & Eggert

(57) **Zusammenfassung**

Gegenstand der Erfindung ist ein Maschinenständer mit einem langgestreckten Tragkörper (2) und endseitig am Tragkörper (2) angeordneten Standbeinen (3), wobei der Tragkörper (2) derart mit in Längsrichtung verlaufenden Formschlußmitteln (4) gestaltet ist, daß an ihm Anbauteile (5) anbringbar sind. Hier ist der Tragkörper (2) einstückig als Doppelrohrprofil mit zwei mit seitlichem Abstand voneinander parallel zueinander verlaufenden Profilrohren (6) und mindestens einem die Profilrohre (6) verbindenden Mittelsteg (7) ausgeführt. Man er-kennt insbesondere Maschinenhalter (5') und Werkstückstützen (5"), mit deren Ausgestaltung sich die vorliegende Erfindung vordringlich befaßt.

## Beschreibung

Die Erfindung betrifft einen Maschinenständer mit den Merkmalen des Oberbegriffs von Anspruch 1 bzw. Anspruch 2.

Maschinenständer der in Rede stehenden Art sind in verschiedenen Ausführungsformen bekannt. Der bekannte Maschinenständer, von dem die Erfindung konkret ausgeht (EP-A-1 275 476), dient der sicheren Anordnung und Halterung einer Kapp- und Gehrungssäge auf einer Plattform, die ihrerseits mit zwei an der Unterseite befindlichen Maschinenhaltem auf einem langgestreckten Tragkörper des Maschinenständers befestigt ist. Damit ist es möglich, mit der Kapp- und Gehrungssäge oder einer anderen Werkzeugmaschine in einer Arbeitshöhe zu arbeiten, die einem üblichen Arbeitstisch in einem Werkraum entspricht. Der Maschinenständer ersetzt als transportables Gerät gewissermaßen den Arbeitstisch in der Werkstatt.

An dem langgestreckten Tragkörper des bekannten Maschinenständers sind endseitig jeweils zwei Standbeine angeordnet, die in Gebrauchsstellung trapezartig schräg nach außen gerichtet sind. Dadurch hat der Maschinenständer eine hohe Standfestigkeit.

Der Tragkörper ist als verwindungssteifes Rückgrat des Maschinenständers einstückig als Hohlprofil aus stranggepreßtem Leichtmetall, insbesondere Aluminium ausgeführt. In die Hohlkammer des Tragkörpers ist ein Verlängerungsprofil einschiebbar.

Der Tragkörper selbst und das Verlängerungsprofil sind derart mit in Längsrichtung verlaufenden Eormschlußmitteln, daß Anbauteile in Längsrichtung verschiebbar angebracht werden können. Insbesondere sind dies die bereits erwähnten Maschinenhalter für die Plattform der Werkzeugmaschine, insbesondere der Kapp- und Gehrungssäge. Neben den Maschinenhaltern für die Plattform der Kapp- und Gehrungssäge sind auch andere Anbauteile anbringbar. Dabei handelt es sich beispielsweise um Werkstückstützen, mit denen ein langes Werkstück in Höhe des Werkstückauflagetisches der Kapp- und Gehrungssäge unterstützt werden kann, und um Längenanschläge für ein solches Werkstück.

Vergleichbar konstruierte Maschinenständer sind auch aus anderem Stand der Technik bekannt (US-A-5,836,365; DE-A-103 03 115).

Die Konstruktion des zuvor erläuterten Maschinenständers, von der die Erfindung ausgeht, ist hinsichtlich der Ausgestaltung der Werkstückstützen noch nicht optimal. Insoweit liegt der Lehre daher das Problem zugrunde, einen in dieser Hinsicht optimierten Maschinenständer zu schaffen.

Die zuvor aufgezeigte Problemstellung ist bei einem Maschinenständer mit den Merkmalen des Oberbegriffs von Anspruch 1 durch die Merkmale des kennzeichnenden Teils von Anspruch 1 gelöst. Mit dieser Konstruktion kann man durch Höhenverstellung der Auflage von der Auflagewirkung auf die Wirkung des Längenanschlags und umgekehrt umstellen.

In einer weiteren Ausführungsform ist das zuvor aufgezeigte Problem bei einem Maschinenständer mit den Merkmalen des Oberbegriffs von Anspruch 2 durch die Merkmale des kennzeichnenden Teils von Anspruch 2 gelöst. Bei dieser Version läßt sich durch eine einfache Schwenkverstellung die Werkstückstütze zwischen der Stützposition und der Anschlagposition umschalten.

Bevorzugte Ausgestaltungen und Weiterbildungen der zuvor aufgezeigten Lehre sind Gegenstand der Unteransprüche.

Für die folgenden Erläuterungen gilt, daß Bezüge zu horizontal und vertikal, Längsrichtung und Querrichtung bei aufgebautem Maschinenständer, also in Gebrauchsstellung, zu verstehen sind, sofern nichts anderes gesagt wird.

Nachfolgend wird der erfindungsgemäße Maschinenständer anhand einer lediglich Ausführungsbeispiele darstellenden Zeichnung näher erläutert.

Bei der Erläuterung der Ausführungsbeispiele anhand der Zeichnung werden auch alle Vorteile und Wirkungen verschiedener Merkmale des erfindungsgemäßen Maschinenständers im Detail erläutert. In der Zeichnung zeigt
- Fig. 1: in einer perspektivischen Ansicht ein Ausführungsbeispiel eines erfindungsgemäßen Maschinenständers ohne aufgebaute Werkzeugmaschine,
- Fig. 2: in einer Fig. 1 entsprechenden Darstellung den Maschinenständer aus Fig. 1 nun mit einer aufgebauten Werkzeugmaschine, nämlich einer Kapp- und Gehrungssäge,
- Fig. 3: das Ende des Tragkörpers eines Maschinenständers gemäß Fig. 1 in perspektivischer Ansicht mit daran angebrachtem, teilweise ausgezogenem Verlängerungsrohr,
- Fig. 4: in perspektivischer Ansicht eine Werkstückstütze als Anbauteil eines Maschinenständers der in Rede stehenden Art,
- Fig. 5: in einer Fig. 3 ähnlichen Darstellung die Klemmechanik einer Werkstückstütze gemäß Fig. 4,
- Fig. 6: in perspektivischer Ansicht ein weiteres Ausführungsbeispiel einer Werkstückstütze, hier mit einer Auflagerolle,
- Fig. 7: in perspektivischer Ansicht ein drittes Ausführungsbeispiel einer Werkstückstütze in Stützstellung,
- Fig. 8.: die Werkstückstütze aus Fig. 7 in Anschlagstellung.

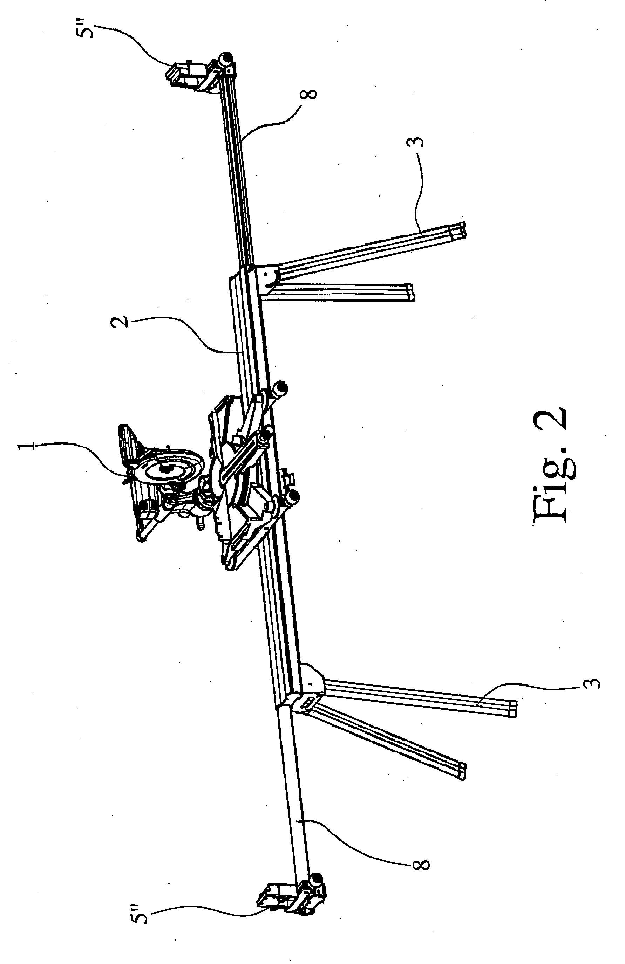

Der in den Zeichnungen in verschiedenen Ausführungsbeispielen dargestellte erfindungsgemäße Maschinenständer dient gewissermaßen als transportabler Arbeitstisch zur Anordnung einer Werkzeugmaschine, insbesondere einer Kapp- und Gehrungssäge 1 (Fig. 2) in einer angenehmen ßearbeitungshöhe, beispielsweise an einer Baustelle oder an unterschiedlichen Stellen im Haus bei einem Innenausbau.

Für die Anordnung der Kapp- und Gehrungssäge 1 auf dem Maschinenständer gibt es verschiedene Möglichkeiten, die umfangreich aus dem Stand der Technik bekannt sind. Grundsätzlich könnte man die Kapp- und Gehrungssäge 1 auf dem Maschinenständer insgesamt ihrerseits nochmals um eine Hochachse drehbar anordnen, um bestimmte Zusatzfunktionen zu erzielen.

Im übrigen gilt, daß der Maschinenständer ein Universalteil ist, das mit jeder Art von Werkzeugmaschine sinnvoll eingesetzt werden kann.

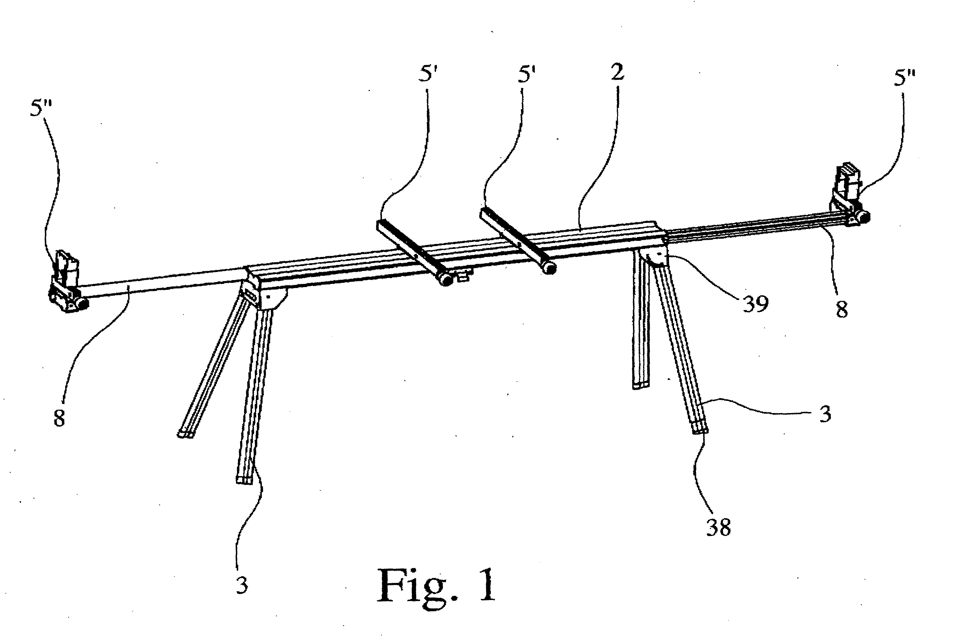

Der in Fig. 1 und 2 zunächst in seiner Gesamtheit dargestellte Maschinenständer weist als sfrukturgebendes Rückgrat einen langgestreckten Tragkörper 2 auf. Endseitig am Tragkörper 2 sind Standbeine 3 angeordnet. Normalerweise hat man insgesamt vier Standbeine 3, die jeweils paarweise am Ende des Tragkörpers 2 in Gebrauchsstellung nach außen trapezartig abragen und so dem Maschinenständer insgesamt einen sicheren Stand geben.

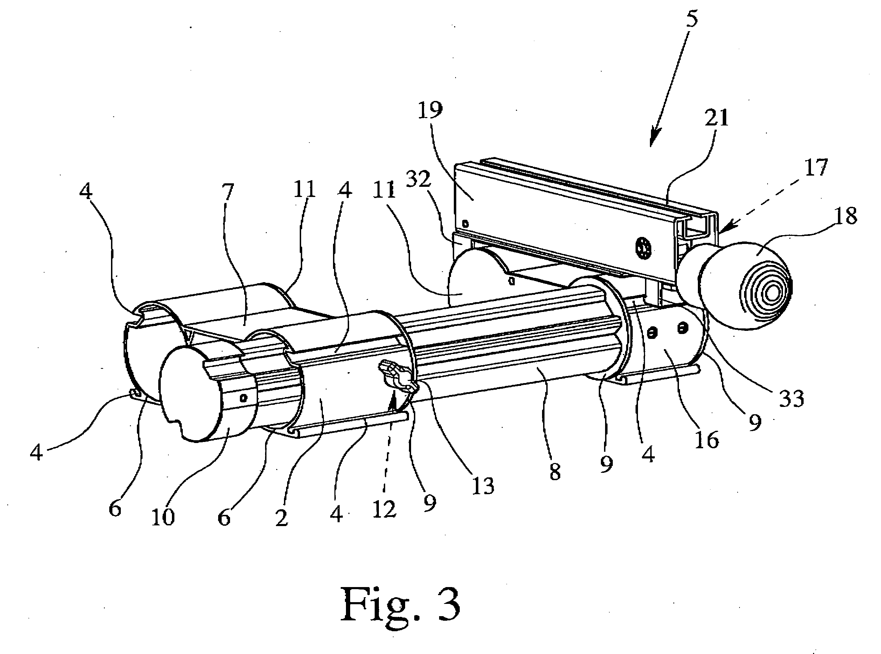

Bereits in Fig. 1 und 2 ist angedeutet, in Fig. 3 ist es deutlicher erkennbar, daß der Tragkörper 2 derart mit in Längsrichtung verlaufenden Formschlußmitteln 4 gestaltet ist, daß an ihm Anbauteile 5, insbesondere mindestens ein Maschinenhalter 5', in Fig. 1 sind zwei Maschinenhalter 5' zu sehen, anbringbar sind. Die Anbringung der Anbauteile 5 am Tragkörper 2 ist gegebenenfalls längsverschiebbar gewährleistet. Das gilt in Fig. 1 und 2 für die Maschinenhalter 5', wodurch es möglich ist, die Werkzeugmaschine, hier die Kapp- und Gehrungssäge 1, genau mittig auf dem Tragkörper 2 zu positionieren.

Anhand der weiteren Figuren werden nun viele Details des erfindungsgemäßen Maschinenständers im einzelnen beschrieben.

In Fig. 3 ist das rechte Ende des Tragkörpers 2 etwa in der Mitte dargestellt. Man muß also verstehen, daß sich der Tragkörper 2 bei der Darstellung in Fig. 3 nach links über den Bildrand hinaus fortsetzt.

Wesentlich ist nun zunächst, daß nach einer ersten Lehre der Erfindung der Tragkörper 2 einstückig als Doppelrohrprofil mit zwei mit seitlichem Abstand voneinander parallel zueinander verlaufenden Profilrohren 6 und mindestens einem die Profilrohre 6 verbindenden Mittelsteg 7 ausgeführt ist. Insbesondere gilt, daß im dargestellten und bevorzugten Ausführungsbeispiel die Profilrohre 6 des den Tragkörper 2 bildenden Doppelrohrprofils durch zwei mit Abstand übereinander liegende Mittelstege 7 verbunden sind.

Dabei ist der Tragkörper 2 insgesamt nach bevorzugter Lehre als Strangpreßprofil aus hochfestem, vorzugsweise faserverstärktem Kunststoff ausgeführt oder, im dargestellten Ausführungsbeispiel und nach bevorzugter Lehre aus Leichtmetall, insbesondere Aluminium als Profil extrudiert. Die im Querschnitt hantelförmige Gestalt des Tragkörpers 2 gibt diesem nicht nur eine vorzügliche Verwindungssteifigkeit über die volle Länge des Tragkörpers 2, sondern auch noch ein sehr elegantes, geschlossenes Aussehen. Zwei übereinanderliegende Mittelstege 7 führen dazu, daß man glatte Außenflächen hat und den Tragkörper 2 besonders gut reinigen kann.

Das dargestellte und bevorzugte Ausführungsbeispiel (Fig. 3) zeigt ferner, daß der Innenquerschnitt der Profilrobre 6 des Doppelrohrprofils nicht rund ist. Die Formschlußmittel 4 sind an den Profilrohren 6 ausgebildet und derart angeordnet, daß eben diese Funktion erreicht wird. Im dargestellten Ausführungsbeispiel sieht man (Fig. 3) an der Oberseite der Profilrohre 6 oberseitig als Längsnuten in das Profilrohr 6 eingebrachte Fonnschlußmittel 4, während unterseitig nach außen abragende leistenartige Formschlußmittel 4 zu sehen sind.

Bereits Fig. 1 zeigt den Tragkörper 2 des Maschinenständers beidseitig verlängert. In Fig. 3 kann man ferner erkennen, daß nach bevorzugter Lehre dazu vorgesehen ist, daß in mindestens einem Profilrohre 6 ein Verlängerungsrohr 8 mit dem Innenquerschnitt des Profilrohrs 6 angepaßtem Außenquerschnitt ausziehbar angeordnet ist. Ein Verlängerungsrohr in jedem der beiden Profilrohre 6 erlaubt die in Fig. 1 und 2 erkennbare Verlängerung des Tragkörpers 2 zu beiden Enden hin gewissermaßen in "symmetrischer" Weise. Man kann so die wirksame Länge für die Unterstützung langgestreckter Werkstücke auf etwa die 2 ½-fache Länge des Tragkörpers 2 selbst erhöhen.

Während das Grundprinzip der beidseits ausziehbaren Verlängezungsrohre 8 an sich aus dem Stand der Technik bekannt ist, soll nun anhand der Fig. 3 erläutert werden, was bei der vorliegenden Erfindung an besonderen Merkmalen für die Verlängerungsrohre 8 verwirklicht ist. Grundsätzlich sind diese Merkmale unabhängig davon zu verwirklichen, wie der Tragkörper 2 gestaltet ist.

Zunächst ist vorgesehen, daß das Verlängerungsrohr 8 am äußeren Ende offen ist und einen lichten Innendurchmesser aufweist, der einem Nenn-Außendurchmesser von Rohren, insbesondere im Zollznaß, entspricht. Dadurch ist es möglich, nochmals ein weiteres Verlängerungsrohr einzubringen, nämlich eine dann vom Benutzer selbst zu realisierende Verlängerung mit einem normalen Installationsrohr vornehmen zu können.

Selbst sehr sauber extrudierte Profile haben ihre Unebenheiten. Deshalb ist es ungünstig, das Verlängerungsrohr 8 im Profilrohr 6 des Tragkörpers 2 unmittelbar gleitend zu führen. Außerdem würde dann die Oberfläche des Verlängerungsrohrs 8 sehr schnell unansehnlich. Demzufolge sieht die erfindungsgemäße Konstruktion vor, daß am Ende des Profilrohrs 6 eine Gleitlagerhülse 9 und am innenliegenden Ende des Verlängerungsrohrs 8 ein Gleitlagerstopfen 10 fest angebracht ist. Bevorzugt ist es dabei, daß die Gleitlagerhülse 9 bzw. der Gleitlagerstopfen 10 aus vorzugsweise, mit Gleithilfsmitteln ausgerüstetem Kunststoff besteht. Bei solchem Gleithilfsmittel handelt es sich üblicherweise um einen Zusatz aus PTFE oder um im Kunststoff eingelagerte sonstige Fremdstoffe. Durch die Gleitlagerhülse 9 und den Gleitlagerstopfen 10 wird ein minimaler Spalt zwischen Verlängerungsrohr 8 und Profilrohr 6 geschaffen, so daß deren Oberflächen nicht unmittelbar aufeinander gleiten, sondern nur die Werkstoffpaarung Kunststoff/Metall (bei Ausführung des Tragkörpers 2 aus Aluminium) auftritt. Die Fixierung der Gleitlagerhülse 9 und des Gleitlagerstopfens 10 am Profilrohr 6 bzw. Verlängerungsrohr 8 kann durch Klebung erfolgen, erfolgt in den dargestellten Ausführungsbeispielen jedoch mechanisch durch Stifte oder Schrauben.

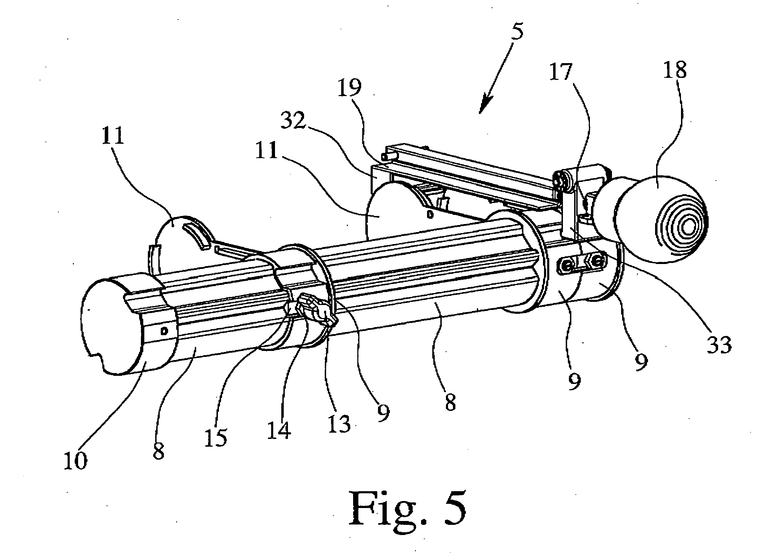

Fig. 3 und 5 lassen sehr schön erkennen, daß man die Gleitlagerhülse 9, insbesondere wenn sie aus Kunststoff gespritzt ist, bei der Ausführung des Tragkörpers 2 als Doppelrohrprofil weiter optimieren kann. Dargestellt ist dort nämlich, daß die Gleitlagerhülse 9 am Ende des einen Profilrohrs 6 mit einer Verschlußkappe 11 am Ende des benachbarten Profilrohrs 6 einteilig ausgeführt, insbesondere einstückig aus Kunststoff gespritzt ist.

Der Gleitlagerstapfen 10 am Verlängerungsrohr 8 im Profilrohr 6 dient in Verbindung mit der Gleitlagerhülse 9 am Profilrohr 6 gleichzeitig als Anschlag für das Ausziehen des Verlängerungsrohrs 8 aus dem Profilrohr 6. Normalerweise wird aber das Verlängerungsrohr 8 weiter innen im Profilrohr 6 sitzen, so wie das Fig. 5 andeutet. Sonst kann das Verlängerungsrohr 8 die auf ihm allein schon aufgrund seines Eigengewichts lastenden Biegemomente nicht vernünftig in das Profilrohr 6 ableiten. Möglicherweise trägt das Verlängerungsrohr 8 entsprechende Markierungen, um ein zu weites Ausziehen aus dem Profilrohre 6 zu vermeiden.

In der gewünschten Stellung soll das Verlängerungsrohr 8 am Profilrohr 6 natürlich fixiert werden können. Die hierzu typische Spannschraube ist bei der bevorzugten Ausführung des erfindungsgemäßen Maschinenständers sehr elegant in die Gleitlagerhülse 9 integriert. Wie Fig. 3 und 5 erkennen lassen ist nämlich hier realisiert, daß das Profilrohr 6 am der Gleitlagerhülse 9 zugeordneten Ende eine Radialbohrung 12 für eine Klemmschraube 13 aufweist und die Gleitlagerhülse 9 einen Gewindeblock 14 und ein Druckverteilungselement 15 für die Klemmschraube 13 trägt. Man kann die Radialbohrung 12 unter der Klemmschraube 13 in Fig. 3 vermuten. Die durch die Radialbohrung 12 in den Gewindeblock 14 eingeschraubte Klemmschraube 13 kann gleichzeitig der axialen Fixierung der Gleitlagerhülse 9 im Profilrohr 6 dienen. Konkret wird hier jedoch die Gleitlagerhülse 9 durch axial in Schraubkanäle des Profilrohrs 6 eingeschraubte Befestigungsschrauben gewährleistet, Der Gewindeblock 14 bildet das Widerlager für das Spannen der Klemmschraube 13 gegen das Verlängerungsrohr 8. Damit dessen Oberfläche keinen Schaden nimmt, ist am Kunststoff der Gleitlagerhülse 9 eine Art Lasche ausgeschnitten, die als Druckverteilungselement 15 dient.

Die Fig. 3 bis 8 zeigen eine weitere Besonderheit des erfindungsgemäßen Maschinenständers. Die Befestigungsmethode für Anbauteile 5 am Tragkörper 2 wird hier mittels entsprechender Grundträger 16 auch an den Verlängerungsrohren 8 wiederholt. Dazu ist vorgesehen, daß auf dem Verlängerungsrohr 8 am äußeren Ende ein Grundträger 16 für Anbauteile 5 aufgesteckt und befestigt ist. Dabei ist im dargestellten und bevorzugten Ausführungsbeispiel vorgesehen, daß der Grundträger 16 ein kurzer Abschnitt des Profils ist, das auch den Tragkörper 2 bildet. Damit ist natürlich gemeint, daß ein kurzes Stück eines Doppelrohrprofils, wie es für den Tragkörper 2 verwendet wird, hier als Grundträger 16 für Anbauteile 5 eingesetzt wird.

Die Anbringung des Grundträgers 16 auf dem Verlängerungsrohr 8 erfolgt in entsprechender Weise wie die Anbringung des Verlängerungsrohrs 8 im Profilrohr 6 mittels entsprechender Gleitlagerhülsen 9. In Fig. 3 und Fig. 5 kann man im Zusammenhang erkennen, daß nach bevorzugter Lehre hier zwei Gleitlagerhülsen 9 beidseits am Grundträger 16 vorgesehen sind. Beide Gleitlagerhtilsen 9 sind hier mittels versenkter Schrauben dauerhaft am Grundträger 16 fixiert.

Am Grundträger 16 lassen sich wie am Tragkörper 2 selbst die gewünschten Anbauteile 5 befestigen.

Nach besonders bevorzugter und eigenständiger Lehre erkennt man, daß als Anbauteil 5 eine Werkstückstütze 5" vorgesehen und mittels einer Schraubklemmung oder einer Federkraftklemmung über die Formschlußmittel 4 am Tragkörper 2 bzw. am Grundträger 16 fixierbar ist. Dabei kann man vorsehen, daß die Werkstückstütze 5" aus Blechformteilen und/oder aus Kunststofformteilen besteht.

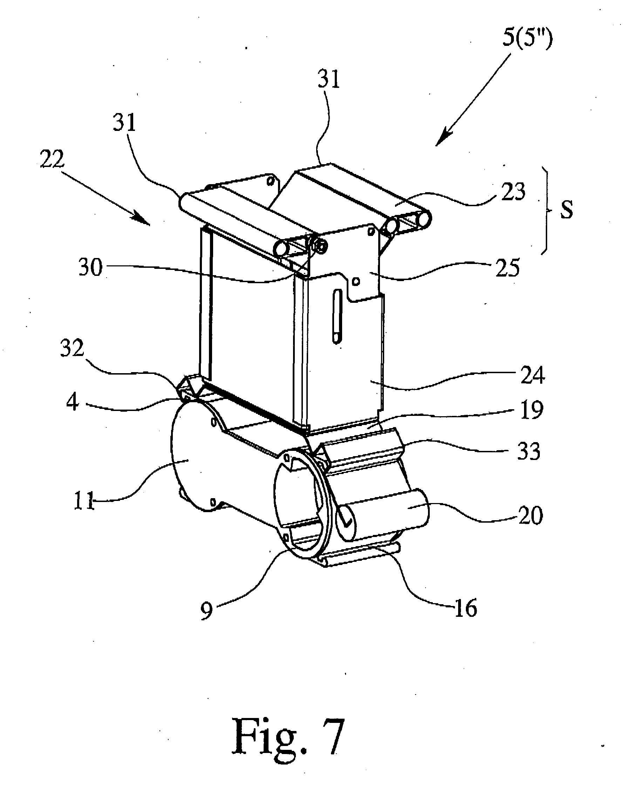

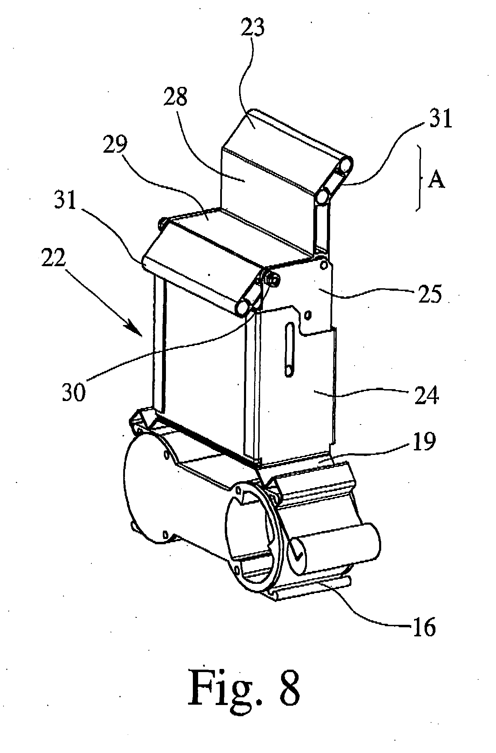

Die Ausfuhrungsbeispiele gemäß Fig. 3-6 zeigen Werkstückstützen 5" mit Schraubklemmung mit Gewindestange 17 und Drehknauf 18. Die Ausführungsbeispiele von Fig. 7 und 8 zeigen eine Federkraftklemmung mit einem aus Federstahl bestehenden Grundkörper 19, an dessen rechts liegendem Ende in Fig. 7 und 8 eine Handhabe 20 als eine Art Wulst zu sehen ist.

Die Schraubklemmung mittels. Drehknauf 18 und Gewindestange 17 ist auch beim Maschinenhalter 5' eine sehr zweckmäßige Lösung. Bei mehreren Umdrehungen des Drehknaufs 18 bis in die Fixierungsstellung kann man die Verspannung des Maschinenhalters 5' am Tragkörper 2 feinfühlig einstellen.

Die in diesen Ausführungsbeispielen dargestellte Werkstückstütze 5" weist einen Grundkörper 19 auf. Dieser enthält bzw. bildet hier auch eine Klemmmechanik. In den Fig. 3, 4, 6 erkennt man dabei, daß am Grundkörper 19 eine quer zum Tragkörper 2 verlaufende Befestigungsschiene 21 vorgesehen ist.

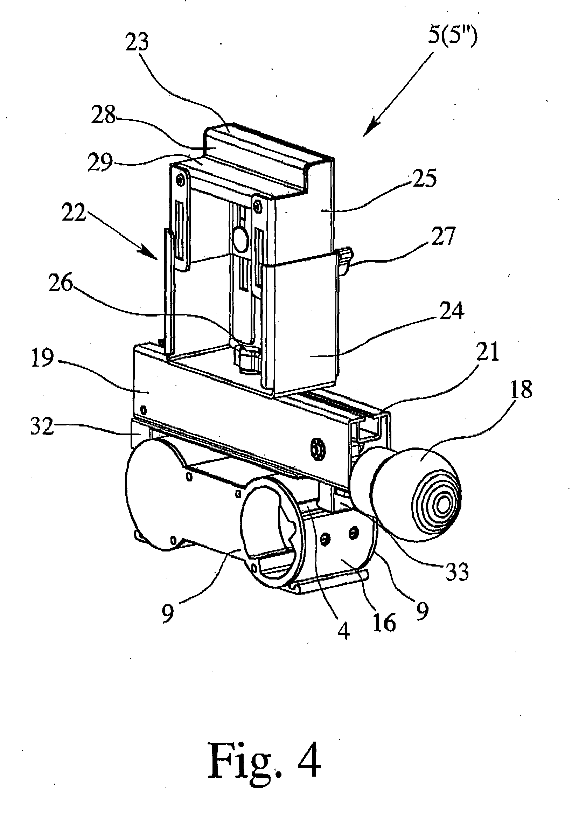

Fig. 4 zeigt ein Ausführungsbeispiel einer Werkstückstütze 5", bei der vorgesehen ist, daß am Grundkörper 19, insbesondere an dessen Befestigungsschiene 21, ein Stützkörper 22 mit einer höhenverstellbaren Auflage 23 für ein Werkstück befestigt ist.

Das in Fig. 4 dargestellte bevorzugte Ausfühnmgsbeispiel zeigt, daß hier der Stützkörper 22 ein Unterteil 24 und ein dagegen höhenverstellbares Oberteil 25 mit der Auflage 23 aufweist. Dabei ist erkennbar, daß zur Höhenverstellung das Oberteil 25 gegenüber dem Unterteil 24 vertikal verschiebbar ist. Man erkennt am Unterteil 24 einen Drehknauf 26, mit dem eine Klemmechanik zur seitlichen Verstellung des Stützkörpers 22 auf der Befestigungsschiene 21 bedient werden kann. Außerdem erkennt man in Fig. 4 rückseitig am Unterteil 24 einen weiteren Drehknauf 27 für die Höhenverstellung des Oberteils 25 gegenüber dem Unterteil 24. Links davon ist ein weiterer Drehknauf verdeckt angeordnet.

Das in Fig. 4 dargestellte und insoweit bevorzugte Ausführungsbeispiel zeigt im übrigen, daß vor der Auflage 23 des Oberteils 25 eine Stufe liegt, deren vertikal verlaufende Fläche 28 einen Längenanschlag und deren davor liegende horizontale Fläche eine zweite Auflage 29 für ein Werkstück bildet. In einer unteren Stellung wirkt die Werkstückstütze 5" gemäß Fig. 4 nur als Auflage für das Werkstück. In einer angehobenen Stellung hingegen kommt die vertikal ausgerichtete Fläche 28 als Längenanschlag für das Werkstück zur Geltung. Das Werkstück liegt dann nicht mehr auf der Auflage 23, sondern auf der durch die vertikal verlaufende Fläche 28 nach unten versetzt angeordneten zweiten Auflage 29.

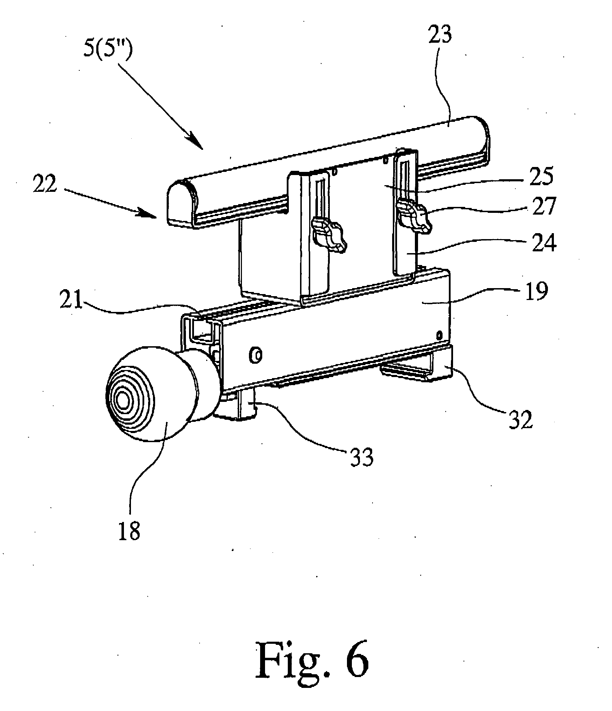

Das in Fig. 6 dargestellte weitere Ausführungsbeispiel einer Werkstückstütze 5" läßt zunächst besonders schön die Befestigungsschiene 21 mit dem Drehknauf 18 und auf der Befestigungsschiene 21 den Stützkörper 22 mit dem Unterteil 24 und dem dagegen höhenverstellbaren Oberteil 25 (rechts und links die Drehknaufe 27) erkennen. Als Auflage 23 dient hier eine Auflagerolle.

Ein weiteres und besonders interessantes Ausführungsbeispiel einer Werkstückstütze 5" ist in Fig. 7 und 8 dargestellt. Nicht zwingend notwendig, aber hier verwirklicht, ist ein gegenüber dem Unterteil 24 vertikal verstellbares Oberteil 25. Hier ist allerdings vorgesehen, daß die Auflage 23 an einer um eine horizontal und quer zum Tragkörper 2 verlaufende Schwenkachse 30 schwenkbaren Winkelanordnung ausgebildet ist, die einerseits in einer Stützposition S und andererseits in einer dagegen um 45° versetzten Anschlagposition A am Stützkörper 22, insbesondere an dessen Oberteil 25, fixierbar ist. Fig. 7 zeigt die Stützposition S, Fig. 8 die dagegen um 45° geschwenkte Anschlagposition A. Mit einer einfachen Schwenkverstellung läßt sich diese Werkstückstütze 5" gewissermaßen "umschalten".

Im dargestellten Ausführungsbeispiel ist vorgesehen, daß die Fixierung der Winkelanordnung in der Stützposition S durch einen einseitigen Anschlag erfolgt, Ferner kann man vorsehen, daß die Fixierung der Winkelanordnung in der Anschlagposition A durch eine Rastung oder einen Fixierstift erfolgt.

Schließlich erkennt man in Fig. 7 besonders gut, daß im hier dargestellten und bevorzugten Ausführungsbeispiel die Winkelanordnung mit in Stützposition S horizontal liegenden, die Auflage 23 bildenden Stützflanschen 31 versehen ist und/oder daß in der Anschlagposition A eine zweite Auflage 29 in Wirkung tritt, die gegenüber der ersten Auflage 23 um 45° versetzt liegt. So hat man für ein langgestrecktes Werkstück in der Stellung gemäß Fig. 7 eine saubere großflächige Auflage, während in der Stellung von Fig. 8 ein ebenso gradliniger Anschlag mit einer dort wirkenden zweiten Auflage 29 gewährleistet ist.

Wie bereits im Stand der Technik realisiert ist, kann man vorsehen, daß für den Anbau einer Maschine, insbesondere einer Kappsäge, zwei parallel zueinander und quer zum Tragkörper 2 angeordnete Maschinenhalter 5' vorgesehen sind. Das erkennt man in Fig. 1 und 2 im Zusammenhang.

Für alle Anbauteile 5, also sowohl für die Maschinenhalter 5' als auch für die Werkstückstützen 5", kann man mit den nachfolgend näher erläuterten Anbringungstechniken zum Tragkörper 2 bzw. zu dessen Formschlußmitteln 4 hin arbeiten.

Grundsätzlich kann man vorsehen, daß das Anbauteil 5 mittels einer Klemmechanik über die Formschlußmittel 4 am Tragkörper 2 fixierbar ist und daß die Klemmechanik, insbesondere an einem Grundprofil, eine feststehende Klemmbacke 32 und eine dagegen verstellbare Klemmbacke 33 aufweist. Derartige Klemmbacken 32, 33 erkennt man bei den Werkstückstützen 5" gemäß Fig. 3 - 8.

## Patentansprüche

1. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteile (5), insbesondere mindestens ein Maschinenhalter (5'), gegebenenfalls in Längsrichtung verschiebbar, anbringbar sind,
wobei, vorzugsweise, der Tragkörper (2) zwei parallel zueinander verlaufende Profilrohre (6) aufweist, in mindestens einem Profilrohr (6) ein Verlängerungsrohr (8) mit dem Innenquerschnitt des Profilrohrs (6) angepaßtem Außenquerschnitt ausziehbar angeordnet ist und auf dem Verlängerungsrohr (8) am äußeren Ende ein Grundträger (16) für Anbauteile (5) aufgesteckt und befestigt ist,
wobei als Anbauteil (5) eine Werkstückstütze (5") vorgesehen und mittels einer Schraubklemmung oder einer Federkraftklemmung über die Formschlußmittel (4) am Tragkörper (2) bzw, am Grundträger (16) fixierbar ist,
wobei die Werkstückstütze (5") einen die Klemmechanik aufweisenden Grundkörper (19) aufweist, am Grundkörper (19) ein Stützkörper (22) mit einer höhenverstellbaren Auflage (23) für ein Werkstück befestigt ist und der Stützkörper (22) ein Unterteil (24) und ein dagegen höhenverstellbares Oberteil (25) mit der Auflage (23) aufweist,
**dadurch gekennzeichnet,**
**daß** vor der Auflage (23) des Oberteils (25) eine Stufe liegt, deren vertikal verlaufende Fläche (28) einen Längenanschlag und deren davor liegende horizontale Fläche eine zweite Auflage (29) für ein Werkstück bildet.

2. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteile (5), insbesondere mindestens ein Maschinenhalter (5'), gegebenenfalls in Längsrichtung verschiebbar, anbringbar sind,
wobei, vorzugsweise, der Tragkörper (2) zwei parallel zueinander verlaufende Profilrohre (6) aufweist, in mindestens einem Profilrohr (6) ein Verlängerungsrohr (8) mit dem Innenquerschnitt des Profilrohrs (6) angepaßtem Außenquerschnitt ausziehbar angeordnet ist und auf dem Verlängerungsrohr (8) am äußeren Ende ein Grundträger (16) für Anbauteile (5) aufgesteckt und befestigt ist,
wobei als Anbauteil (5) eine Werkstückstütze (5") vorgesehen und mittels einer Schraubklemmung oder einer Federkraftklemmung über die Formschlußmittel (4) am Tragkörper (2) bzw. am Grundträger (16) fixierbar ist,
wobei die Werkstückstütze (5") einen die Klemmechanik aufweisenden Grundkörper (19) aufweist und am Grundkörper (19) ein Stützkörper (22) mit einer höhenverstellbaren Auflage (23) für ein Werkstück befestigt ist, und wobei, vorzugsweise, der Stützkörper (22) ein Unterteil (24) und ein dagegen höhenverstellbares Oberteil (25) mit der Auflage (23) aufweist,
**dadurch gekennzeichnet,**
**daß** die Auflage (23) an einer um eine horizontal und quer zum Tragkörper (2) verlaufende Schwenkachse (30) schwenkbaren Winkel anordnung ausgebildet ist, die einerseits in einer Stützposition (S) und andererseits in einer dagegen um 45° versetzten Anschlagposition (A) am Stützkörper (22), insbesondere an dessen Oberteil (25), fixierbar ist.

3. Maschinenständer nach Anspruch 2, **dadurch gekennzeichnet,**
**daß** die Fixierung der Winkelanordnung in der Stützposition (S) durch einen einseitigen Anschlag erfolgt.

4. Maschinenständer nach Anspruch 2 oder 3, **dadurch gekennzeichnet,**
**daß** die Fixierung der Winkelanordnung in der Anschlagposition (A) durch eine Rastung oder einen Fixierstift erfolgt.

5. Maschinenständer nach einem der Ansprüche 2 bis 4, **dadurch gekennzeichnet,**
**daß** die Winkelanordnung mit in Stützposition (S) horizontal liegenden, die Auflage (23) bildenden Stützflanschen (31) versehen ist und/oder daß in der Anschlagposition (A) eine zweite Auflage (29) in Wirkung tritt, die gegenüber der ersten Auflage (23) um 45° versetzt liegt.

6. Maschinenständer nach einem der voranstehenden Anspruche, **dadurch gekennzeichnet,**
**daß** zur Höhenverstellung das Oberteil (25) gegenüber dem Unterteil (24) vertikal verschiebbar ist, wobei das Oberteil (25) gegenüber dem Unterteil (24) vorzugsweise durch mindestens eine Verschraubung, insbesondere mittels eines Drehknaufes (27), in seiner Höhenposition fixierbar ist,

7. Maschinenständer nach einem der voranstehenden Ansprüche, **dadurch gekennzeichnet,**
**daß** die Auflage (23) des Stützkörpers (22) bzw. des Oberteils (25) als Auflagerolle ausgeführt ist.

8. Maschinenständer nach einem der voranstehenden Ansprüche, **dadurch gekennzeichnet,**
**daß** am Grundkörper (19) eine quer zum Tragkörper (2) verlaufende Befestigungsschiene (21) vorgesehen ist.

9. Maschinenständer nach einem der voranstehenden Ansprüche, **dadurch gekennzeichnet,**
**daß** die Werkstückstütze (5") aus Blechformteilen und/oder aus Kunststofformteilen besteht.

10. Maschinenständer nach einem der voranstehenden Ansprüche, **dadurch gekennzeichnet,**
**daß** der Grundträger (16) ein kurzer Abschnitt des Profils ist, das auch den Tragkörper (2) bildet.

11. Maschinenständer nach einem der voranstehenden Ansprüche, **dadurch gekennzeichnet,**
**daß** der Tragkörper (2) einstückig als Doppelrohrprofil mit zwei mit seitlichem Abstand voneinander parallel zueinander verlaufenden Profilrohren (6) und mindestens einem die Profilrohre (6) verbindenden Mittelsteg (7) ausgeführt ist.

12. Maschinenständer nach einem der voranstehenden Ansprüche, **dadurch gekennzeichnet,**
**daß** der Innenquerschnitt der Profilrohre (6) nicht rund ist.
